# EUROPEAN PATENT APPLICATION

(11) **EP 3 792 580 A1**
(43) Date of publication of application: **17.03.2021**
(21) Application number: 19197273.6
(22) Date of filing: 13.09.2019
(51) Int. Cl.: F28D 9/00, F28F 3/10, B01D 1/22, C02F 1/20, F28F 3/04, F28F 3/08, F28D 21/00

(54) **PLATE HEAT EXCHANGER FOR TREATMENT OF A LIQUID FEED**

(71) Applicant: Alfa Laval Corporate AB, 221 00 Lund (SE)
(72) Inventor: BLOMGREN, Fredrik, SE-217 45 MALMÖ (SE)
(74) Representative: Alfa Laval Attorneys

(57) **Abstract**

The present invention relates to a plate heat exchanger for treatment of a liquid feed. The plate heat exchanger comprises a plate package having at least two opposite heat exchanger plates defining a plate interspace in-between themselves. Each heat exchanging plate defines a first non-corrugated gasket groove and a second non-corrugated gasket groove whereby a first gasket element sealing between the first gasket grooves and a second gasket element sealing between the second gasket grooves of the opposing plates. A flow channel is thereby established between the first gasket element and the second gasket element in the plate interspace. Each heat exchanging plate further defines first outer corrugated region and a first inner corrugated region extending on opposite sides of the first non-corrugated gasket groove, and, a second outer corrugated region and a second inner corrugated region extending on opposite sides of the second non-corrugated gasket groove.

## Description

The present invention relates to a heat exchanging plate for a plate heat exchanger for treatment of a liquid feed, a plate heat exchanger for treatment of a liquid feed and a method of manufacturing a plate heat exchanger for treatment of a liquid feed.

### Background of the invention

Equipment for desalination of seawater, where one or several plate packages of heat exchanger plates form the main components in the process, has been manufactured since many years. The applicant company has since several years produced a fresh water generator where the evaporation, separation and condensation take place in the plate package. The details may be found in the international application WO 2006 / 104443 A1 assigned to Alfa Laval Corporate AB. It is disclosing a plate heat exchanger for desalination having first- and second type plate interspaces formed in alternating order in the heat exchanger. The first type plate interspaces form evaporation sections, separation sections and condensation sections, whereas the second type plate interspaces form heating sections, separation sections and cooling sections.

The evaporation section is used for evaporating a liquid feed, such as sea water, the separation section is used for separating evaporated feed from non-evaporated feed and the condensation section is used for condensing the evaporated feed. The heating section is heating the evaporation section and the cooling section is cooling the condensation section. The advantage of the above-mentioned heat exchanger is that it does not need any container since the whole treatment of the seawater is performed in the plate package.

The above plate heat exchanger has centrally located ports for heating fluid, cooling fluid and fresh water and the ports for brine and feed are symmetrically arranged about a central axis of the heat exchanger plate. In this way only one plate type is needed. The first type interspaces and second type interspaces are formed by using two different gaskets and arranging the heat exchange plates face to face by turning every second plate 180 degrees about the centre axis. In this way the corrugations in the opposing plates in the evaporation sections and condensation sections will form a cross-shaped pattern in which opposing ridges abut.

In the separation section the plates are designed such that the corrugated pattern of two adjacent plates will fall into each other and not abut. In this way a meandering flow path is achieved which traps droplets of non-evaporated feed which is released from the evaporation section while evaporated feed can pass through to the condensation section. The droplets of non-evaporated feed are then led to the edges of the plate and at each edge a brine outlet channel is present for transporting the separated droplets from the separation section and non-evaporated feed from the evaporation section to a brine outlet located below the evaporation section.

In the above-mentioned fresh water generator, the brine outlet channel is created by having a halfplane between two gasket elements. Each gasket element is held in place in a respective non-corrugated gasket groove between corrugated regions. Each of the corrugated regions between the gasket grooves and the halfplane are constituted by a row of tops and bottoms. The tops and bottoms will abut tops and bottoms respectively on the adjacent plates thus forming a channel. The drawback with this design is that the effective flow area of the channel will be restricted by the narrowest section that is created between each pair of tops and bottoms of the respective corrugated regions on opposite sides of the halfplane.

This has worked with satisfactory results for larger fresh water generators, however for smaller fresh water generators where space is limited a more area efficient solution would be advantageous.

It is thus an object of the present invention to find a more area efficient solution for the brine channel.

Further prior art includes CN203820488UU disclosing a heat exchange plate which is sequentially divided from top to bottom into a condensation zone, an evaporation zone and a heating zone.

CN206262115UU describes an evaporating-separating-condensing three-in-sea water collecting plate. The gas-liquid separation zone separation structure using a flap. The flap is provided with reinforcing ribs.

GB1211065A describes a plate heat exchanger in which two plates are assembled in superimposed relation. One of the plates being turned 180° in its own plane relative to the other, and a passage is obtained between the plates.

KR101345733B1 describes a heat exchanger plate with barriers.

US8646517B2 describes a heat exchanger plate heat exchanger plate for a plate heat exchanger, which plate has a number of ports, a distribution region, a heat transfer region, a first adiabatic region, a second adiabatic region and an edge area that extends outside the ports and the regions.

### Summary of the invention

The above objects are realised in a first aspect by a plate heat exchanger for treatment of a liquid feed, the plate heat exchanger comprising a plate package having at least two opposite heat exchanger plates defining a plate interspace in-between themselves, each heat exchanging plate defining:
a first non-corrugated gasket groove and a second non-corrugated gasket groove extending parallel to the first non-corrugated gasket groove, whereby a first gasket element sealing between the first non-corrugated gasket grooves of the opposing heat exchanging plates and a second gasket element sealing between the second non-corrugated gasket grooves of the opposing heat exchanging plates, thereby establishing a flow channel between the first gasket element and the second gasket element in the plate interspace,
a first outer corrugated region and a first inner corrugated region extending on opposite sides of the first non-corrugated gasket groove, the first inner corrugated region extending within the flow channel and defining a first row of alternating tops and bottoms, and,
a second outer corrugated region and a second inner corrugated region extending on opposite sides of the second non-corrugated gasket groove, the second inner corrugated region extending within the flow channel and defining a second row of alternating tops and bottoms, whereby the tops of the first row being horizontally level with the bottoms of the second row, and vice versa.

The plate package is typically formed by arranging at least two but typically more than two of the heat exchanging plates face to face whereby every second plate is turned 180 degrees. Thus, front surfaces facing each other and rear surfaces facing each other. The opposing front surfaces will form first plate interspace and consequently opposing rear surfaces will form second plate interspaces. Gaskets are provided between the plates and normally two different types of gaskets are used alternatingly, forming first and second type plate interspaces. Typically, the heat exchange is established between the fluids in the first plate interspace and the fluids in the second plate interspace.

The flow channel is provided in order to allow liquids to flow within the plate interspace from e.g. an upper region of the plate interspace to a lower region of the plate interspace. The flow channel is defined in the plate interspaces between the parallel gaskets which contact both the opposing plates at the non-corrugated areas. The opposing tops of the corrugated regions hold the gasket in place in the non-corrugated area as the tops of opposing plates contact and prevent the gaskets from bulging into the flow channel. Any such misplacement of the gasket may lead to leakage etc.

In the present context it should be understood that the tops on the front surface will become bottoms on the rear surface. Consequently, the tops in one plate interspace will become bottoms in the neighbouring plate interspaces and vice versa, and as the tops in one space interspace contact each other, the bottoms will become tops in the neighbouring plate interspaces and contact corresponding tops of opposing plates.

In the prior art flow channel, the tops of opposing inner corrugated regions are horizontally level and the effective flow area of the flow channel is given by the cross-sectional area between two opposing tops of the opposing inner corrugated regions. The non-corrugated region defines a half plane, i.e. between tops and bottoms. The smallest cross-sectional area of the channel between the upper region and the lower region will define the limit for the flow of liquid which may be transported through the flow channel. In case the tops are very close together, the flow area will be small, and the maximum flow of liquid is reduced. In order to increase the maximum flow of liquid, the distance between the tops may be increased widening the distance between the tops of the opposing inner corrugated regions, e.g. in that the non-corrugated area, i.e. the halfplane, between the tops may be widened, however, it will take up space on the plate.

By arranging the flow channel such that the tops of the first inner corrugated region being horizontally level with the bottoms of the second inner corrugated region, the half platen, i.e. the non-corrugated region between the inner corrugated regions, may be smaller or the non-corrugated region between the inner corrugated regions may be omitted altogether such that the first and second inner corrugated regions are adjacent each other. The corrugated regions include flanks surrounding and interconnecting the tops and bottoms. The flanks form a smooth transition between the tops and bottoms. By arranging the inner corrugated region horizontally level with the bottoms of the second inner corrugated region a greater distance between the tops of the inner corrugated regions is achieved since the tops will be both horizontally and vertically offset. In this way, the minimum flow area is given by the flanks between the opposing tops of the respective inner corrugated regions. Thus, the flow will be able to flow in a meandering pattern in the flow channel established between the first and second corrugated region.

The present invention is typically used in connection with a fresh water generator having an evaporation section located in the lower part of the plate package, a condensation section located in the upper part of the plate package and a separation section located in between the evaporation section and the condensation section. The heat exchanging plates at the evaporation section and condensation section are corrugated with a corrugation of ridges and valleys. Each ridge forms a top and each valley forms a bottom.

According to a further embodiment, the tops of the opposing heat exchanger plates are contacting each other.

Typically, the tops of opposing heat exchanger plates in the plate interspace are contacting each other forming contact points. In this way the structural stability between the plates is increased the gasket groove, and the gasket is held better in place in the gasket groove. The bottoms form tops in the neighbouring plate interspaces and thus contact opposing tops of opposing plates.

According to a further embodiment, the outer corrugated regions each define a row of alternating tops and bottoms.

The outer corrugated regions may form tops and bottoms in order to support the gasket in the gasket groove. The tops may contact in order to improve structural stability and for holding the gasket in place. The tops and bottoms at the outer region facing the edge of the plate may be outside the heat transfer area and constitute a simple row of tops and bottoms for holding the gasket in place and for improving structural stability of the plate package. The outer region facing away from edge of the plate, i.e. facing the interior of the plate, may constitute a part of a corrugated heat transfer region and thus the tops and bottoms on this outer region is understood to form part of a corrugated heat transfer area.

According to a further embodiment, the flow channel extends between a separation section and an outlet.

In a typical example, the flow channel extends between a separation section of a fresh water generator and an outlet of the fresh water generator for removing brine and brine droplets from the separation section. The flow regions are typically located on opposite sides of an evaporation section / heating section between the longitudinal edges of the plate and the evaporation section.

According to a further embodiment, the liquid feed is sea water and the flow channel is a brine channel.

One typical application is a fresh water generator for making fresh water from sea water. The by-product is brine which should be removed from the separation section as new feed is introduced into the evaporation section. The flow channel is then a brine channel.

According to a further embodiment, the first outer corrugated region is located adjacent a vertical side edge of the plate.

The droplets may be pushed to the edges of the heat exchanger plate by the upwardly oriented stream of vapor. Thus, it may be beneficial to have the flow channel adjacent the edge of the plate.

According to a further embodiment, the second outer corrugated region is located adjacent an evaporation section or a heating section.

Further, the evaporation section and the heating section are centrally located on the heat exchanger plate but in opposite plate interspaces. Thus, the flow channel may extend from the separation section to the outlet between the heating section and the edge.

According to a further embodiment, a non-corrugated region is located between the first inner corrugated region and the second inner corrugated region, the further non-corrugated regions form part of the flow channel, or alternatively, where the first row is located immediately adjacent the second row.

Typically, by arranging the inner corrugated regions adjacent each other, the space taken up by the flow channel may be minimized and there is no need for a non-corrugated region between the rows of tops and bottoms of the first and second inner corrugated regions. However, in case it would be needed to transport a larger amount of liquid, a non-corrugated region may be used between the first inner corrugated region and the second inner corrugated region in order to increase the cross-sectional area for the flow.

According to a further embodiment, each heat exchange plate defines an opposite flow channel on the opposite side of the heat exchanging plate.

As the separation section typically is established in each plate interspace, each plate interspace preferably also has at least one, preferably two, flow channels. The tops on one side of the heat exchanging plate will become bottoms on the opposite side of the heat exchanging plate and vice versa. The gasket groove typically forms a non-corrugated halfplane between the tops and the bottoms. Thus, flow channels may be established in all plate interspaces. The flow channels in all plate interspaces may thus be formed at the same location on each heat exchanger plate with the only difference that tops and bottoms change places in neighbouring plate interspaces.

According to a further embodiment, a central axis is defined between two vertical side edges of the plate and a mirrored flow channel is provided on the plate symmetrically arranged on the opposite side of the central axis.

As the droplets are led to the edges, it is advantageous to have one flow channel adjacent each of the longitudinal edges. Both flow channels may lead to the same outlet or two separate outlets may be used.

According to a further embodiment, the heat exchange plate having a yet further flow channel located opposite the mirrored flow channel.

In tis way, all plate interspaces may have two flow channels, one flow channel adjacent each edge.

According to a further embodiment, the width of each of the inner corrugated regions are smaller than the width of each of the non-corrugated gasket grooves.

In case the amount of liquid is low, each of the inner corrugated regions may have a smaller width than each of the gasket grooves in order to be able to reduce the overall width of the heat exchanger plate and/or increase the area of the evaporation section.

According to a further embodiment, the distance between the first and second non-corrugated gasket grooves is smaller than twice the width of each of the non-corrugated gasket grooves.

In case the amount of liquid is low, each of the inner corrugated regions may have a smaller width than each of the gasket grooves in order to be able to reduce the overall width of the heat exchanger plate and/or increase the area of the evaporation section.

The above objects are realised in a second aspect by a heat exchanging plate for a plate heat exchanger for treatment of a liquid feed, the heat exchanging plate defining:
a first non-corrugated gasket groove and a second non-corrugated gasket groove extending parallel to the first non-corrugated gasket groove for contacting a first gasket element and a second gasket element, respectively, thereby establishing a flow channel between the first non-corrugated gasket groove and the second non-corrugated gasket groove,
a first outer corrugated region and a first inner corrugated region extending on opposite sides of the first non-corrugated gasket groove, the first inner corrugated region extending within the flow channel and defining a first row of alternating tops and bottoms, and,
a second outer corrugated region and a second inner corrugated region extending on opposite sides of the second non-corrugated gasket groove, the second inner corrugated region extending within the flow channel and defining a second row of alternating tops and bottoms, whereby the tops of the first row being horizontally level with the bottoms of the second row, and vice versa.

The heat exchanger plate according to the second aspect is preferably used to make the heat exchanger according to the first aspect.

The above objects are realised in a third aspect by a method of manufacturing a plate heat exchanger for treatment of a liquid feed by providing a plurality of heat exchanging plates, each heat exchanging plate defining:
a first non-corrugated gasket groove and a second non-corrugated gasket groove extending parallel to the first non-corrugated gasket groove, thereby establishing a flow channel between the first non-corrugated gasket groove and the second non-corrugated gasket groove,
a first outer corrugated region and a first inner corrugated region extending on opposite sides of the first non-corrugated gasket groove, the first inner corrugated region extending within the flow channel and defining a first row of alternating tops and bottoms, and,
a second outer corrugated region and a second inner corrugated region extending on opposite sides of the second non-corrugated gasket groove, the second inner corrugated region extending within the flow channel and defining a second row of alternating tops and bottoms, whereby the tops of the first row being horizontally level with the bottoms of the second row, and vice versa,
   the method further comprising:
   arranging at least two of the heat exchanging plate opposite each other defining a plate interspace in-between themselves and having a first gasket element sealing between the first non-corrugated gasket grooves of the opposing heat exchanging plates and a second gasket element sealing between the second non-corrugated gasket grooves of the opposing heat exchanging plates.

The method according to the third aspect is preferably used together with the heat exchanger plate according to the second aspect to make the heat exchanger according to the first aspect.

### Brief description of the drawings

Fig. 1 discloses a side view of a plate heat exchanger
Fig. 2 discloses a front view of a prior art heat exchanging plate
Fig. 3 discloses how the horizontally oriented ridges and valleys fall into each other
Fig. 4 discloses a front view of an alternative heat exchanging plate
Fig. 5 discloses view of the rear side of an alternative heat exchanger plate
Fig. 6 discloses a closeup of the brine channel of a prior art heat exchanging plate
Fig. 7 discloses a closeup of two opposing heat exchanging plates of the prior art
Fig. 8 discloses a closeup of the brine channel of a heat exchanging plate of the invention
Fig. 9 discloses a closeup of an alternative brine channel of a plate of the invention
Fig. 10 discloses a closeup of two opposing heat exchanging plates of the invention

### Detailed description of the drawings

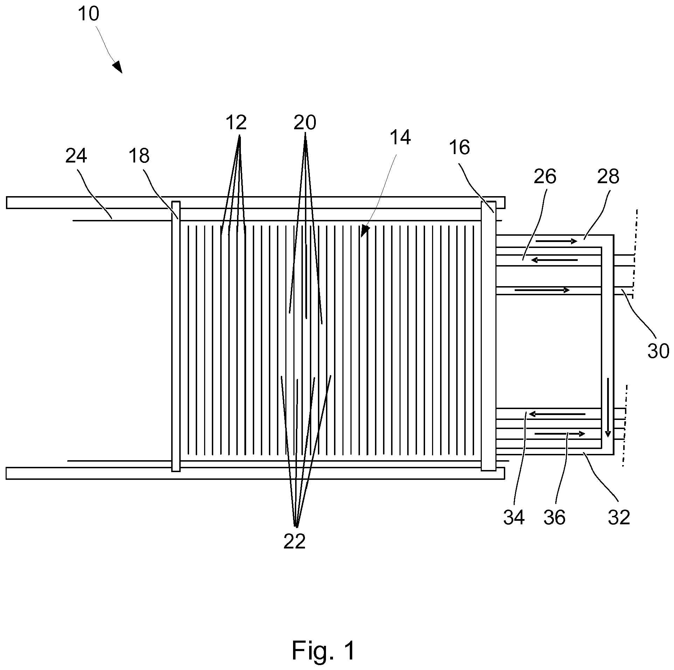

Fig. 1 discloses a side view of a plate heat exchanger 10 of the invention. In the following description an application with respect to desalination of seawater is described, i.e. the feed is sea water. However, it is to be noted that the invention is not limited to the feed being sea water but may also refer to any other treatment, for instance distillation of a liquid. The plate heat exchanger comprises a large number of compression moulded heat exchanger plates 12, which are provided in parallel to each other and successively in such a way that they form a plate package 14. The plate package 14 is provided between a frame plate 16 and a pressure plate 18.

Between the heat exchanger plates 12, first plate interspaces 20 and second plate interspaces 22 are formed. The first plate interspaces 20 and the second plate interspaces 22 are provided in an alternating order in the plate package 14 in such a way that substantially each first plate interspace 20 is surrounded by two second plate interspaces 22, and substantially each second plate interspace 22 is surrounded by two first plate interspaces 20. Different sections in the plate package 14 are delimited from each other by means of gaskets (not shown) in each plate interspace whereby the first plate interspace 20 includes a first type gasket (not shown) and the second plate interspace 22 includes a second type gasket (not shown). The plate package 14, i.e. the heat exchanger plates 12 and the gaskets (not shown) provided therebetween, is kept together by means of schematically indicated tightening bolts 24 in a manner known per se.

The plate package 14 is connected to a cooling water inlet conduit 26, a cooling water outlet conduit 28 and a fresh water outlet conduit 30. The cooling water is typically sea water and thus the cooling water outlet conduit 28 is connected to a sea water inlet conduit 32 in order to recover the heat absorbed by the cooling water. The plate package 12 is further connected to a heating fluid inlet conduit 34 and a heating fluid outlet conduit 36. The heating fluid is used for vaporizing the feed, i.e. the sea water which is entering the plate package 14 through the sea water inlet conduit 32. The heating fluid may be heated water, such as jacket water from a ship's engine. The condensed fresh water is leaving the plate package 14 through the fresh water outlet conduit 30.

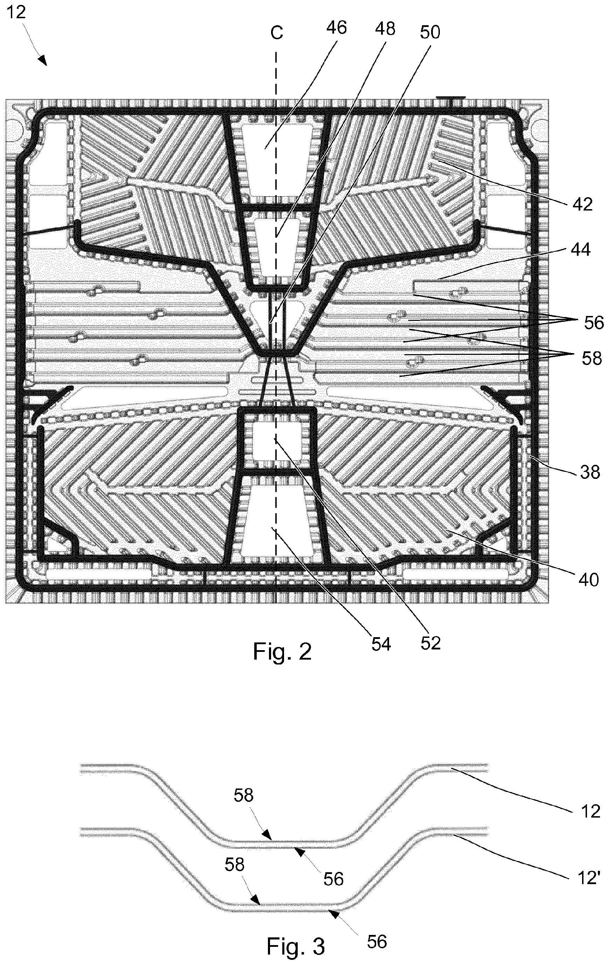

Fig. 2 discloses a front view of a prior art heat exchanging plate 12 having an evaporation section 40, a condensation section 42 and a separation section 44. The plate 12 also defines centrally located ports 46 48 50 52 54 along the centre axis C. The ports 46 48 constituting cooling fluid outlet and inlet ports, the port 50 constitutes a fresh water outlet port and the ports 52 54 constituting heating fluid inlet and outlet ports. The heat exchanging plate 12 has corrugations and the separation section defines transversally oriented ridges 56 and valleys 58. The plate also defines a gasket groove having a gasket 38 for accommodating a gasket.

Fig. 3 discloses how the horizontally oriented ridges 56 and valleys 58 fall into each other in two adjacent plates 12 12'. It is also illustrated how the press depth of the ridges and valleys is increased in the separation section. The ridges 56 and valleys 58 define a press depth such that the lowest part of the upper plate 12 is lower than the highest part of the adjacent plate 12'. In this way the flow path from the evaporation section to the condensation section will be increased, which will improve the separation of liquids from the vaporized feed, however, the press depth of the ridges 56 and valleys 58 must be reduced in locations where the ridges 56 should contact each other.

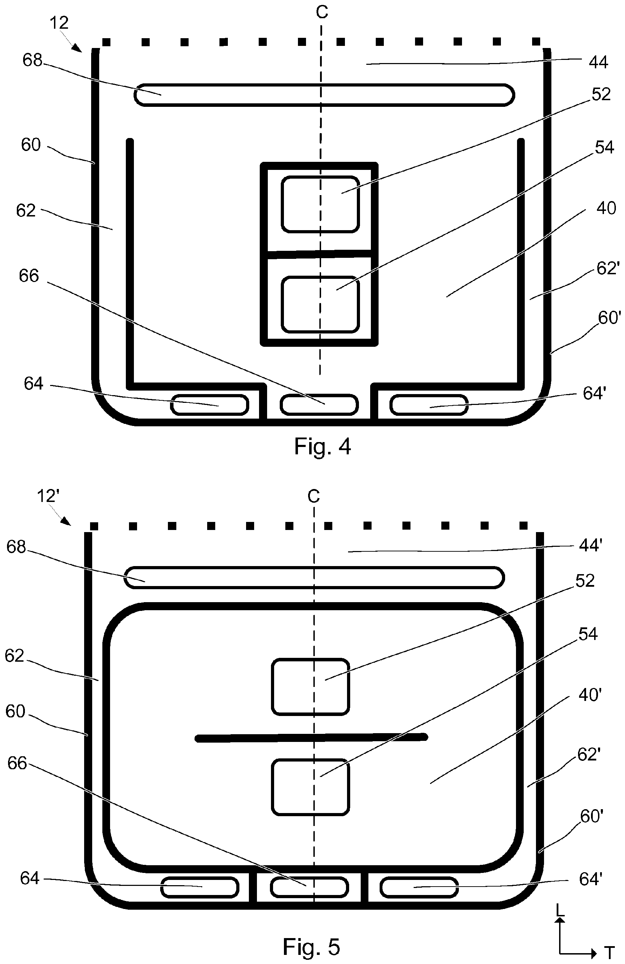

Fig. 4 discloses a front view of the lower parts of a heat exchanging plate 12 according to the present invention. Each heat exchanger plate 12 has a first vertical edge 60, an opposite second vertical edge 60' substantially parallel with the first vertical edge 60 and a centre axis C extending in the vertical direction substantially centrally between the vertical edges 60, 60'. The centre axis C extending substantially vertically when the plate package is located in a normal position of use.

The heat exchanger plate comprises an evaporation section 40 at the bottom for evaporating the feed, i.e. the sea water, a condensation section (not shown) at the top for condensing the evaporated feed and a separation section 44 located in between the evaporation section 40 and the condensation section for separating evaporated feed and non-evaporated feed. Vaporized feed can flow from the evaporation section 40 via the separation section 44 to the condensation section (not shown). The upper part of the heat exchanger plate 12 including the upper part of the separation section 44 and the condensation section have been omitted from the view and is located above the dashed line.

The evaporation section 40 and the condensation section (not shown) are corrugated defining valleys and ridges having oblique angles forming a cross corrugated pattern together with the opposing plate in order to increase the heat transfer through the heat exchanger plate 12. A first plate interspace is formed by arranging two plates 12 face-to-face having a gasket of a first type located in-between the heat exchanger plates. The two plates forming the plate interspace are identical, however, one of the heat exchanger plates is turned 180 degrees about the centre axis C. In this way the corrugation of the heat exchanger plates may be arranged such that opposing ridges form a cross shaped pattern and contact each other at contact points in the evaporation section 40 and the condensation section 42.

Centrally located adjacent the evaporation section 40 is a heating fluid inlet port 52 and a heating fluid outlet port 54 is provided. The heating fluid inlet port 52 is communicating with the heating fluid inlet conduit and the heating fluid outlet port 54 is communicating with the heating fluid outlet conduit.

Brine channels 62 62' are provided on opposite sides of the evaporation section 40 for transporting droplets of non-evaporated feed from the separation section 40 and non-evaporated feed from the evaporation section 40 to outlets 64 64' located at the bottom of the heat exchanger plate 12. The brine channels 62 62' are located between a respective edge 60 60' and the evaporation section 40.

Additionally, a feed inlet port 66 connected to the sea water inlet conduit for supplying sea water to the evaporation section 40 is centrally located adjacent the bottom between the two outlet ports 64. The outlets 64 64' for collecting the non-evaporated feed flowing down from the separation section 44 are located on opposite sides of but separated from feed inlet port 66 at the bottom of the plate 12.

Further, the heat exchanger plate 12 defines one or more apertures 68 located between the evaporation section 40 and the separation section 44 for allowing some vaporized feed from the evaporation section 40 to pass to the opposite plate interspace which includes a parallel separation section.

Fig. 5 discloses view of the rear side of a heat exchanger plate 12' and a second type gasket of a plate heat exchanger according to the present invention. The heat exchanger plate 12' is thus the same as the heat exchanger plate 12 except that it has been turned 180 degrees about the centre axis 46. It defines a heating section 40' opposite the evaporation section. The heating fluid inlet port 52 and the heating fluid outlet port 54 communicate with the heating section 40'. The heating section 40' are sealed off relative to the other ports, respectively. The heating section 40' is arranged to heat the opposite evaporation section. The rear side forms a second plate interspace.

The rear side of a heat exchanger plate 12' also includes a separation section 44' between the heating section 40' and the cooling section 42'. The separation section 44' is only partially visible in the present view. Vaporized feed is introduced via the vapor aperture 68 from the first plate interspace. The separation section 44' functions identically to the one on the opposite side and separates evaporated feed and non-evaporated feed. The evaporated feed flows up through upper vapor apertures (not shown) whereas the non-evaporated feed flows down to the outlets 64 64' via a respective brine channel 62 62' located between the heating section 40' and a respective vertical edge 60 60'. The brine channels 62 62' on the rear side are located directly opposite the ones on the front side and are identical to the brine channels present on the front side, except that tops become bottoms and vice versa.

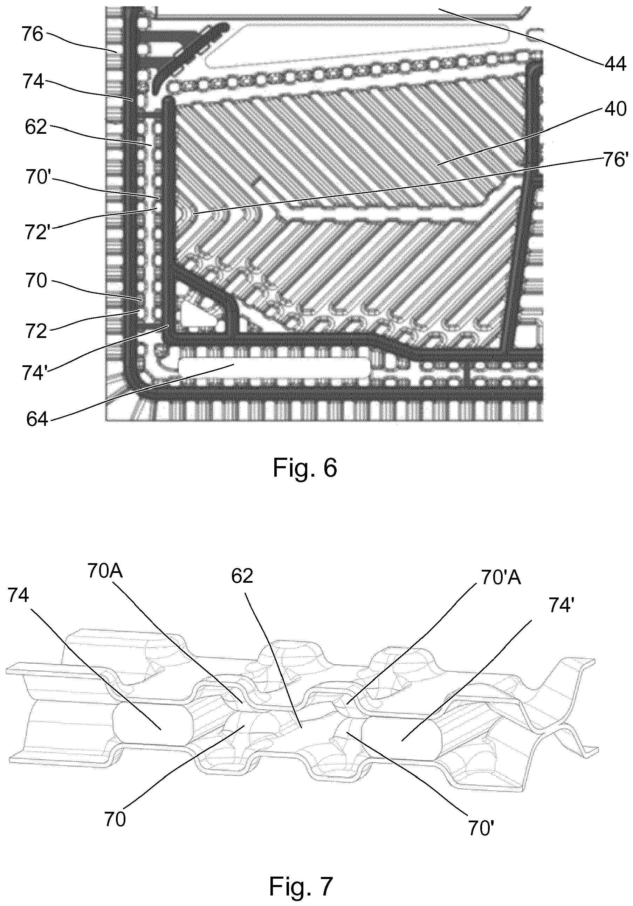

Fig. 6 discloses a closeup front view of the brine channel / flow channel 62 according to the prior art, which is described below as a flow channel. The flow channel 62 is established between the first gasket element 74 which is located at the edge of the heat exchanger plate and the second gasket element 74' which is located adjacent the evaporation section 40. The first gasket 74 is accommodated in a non-corrugated gasket groove of the heat exchanger plate and is held in place between a first inner corrugated region 70 72 forming part of the flow channel 62 and a first outer corrugated region 76 adjacent the edge of the heat exchanger plate. Similarly, the second gasket 74' is accommodated in a non-corrugated gasket groove of the heat exchanger plate and is held in place between a second inner corrugated region 70' 72' forming part of the flow channel 62 and a second outer corrugated region 76' which forms part of the evaporation section 40.

The first and second inner corrugated regions are made up by a respective row of tops 70 70' and bottoms 72 72' forming flanks between them. The tops 70 of the first inner corrugated region is located horizontally level with the tops 70 of the second inner corrugated region and the bottoms 72 of the first inner corrugated region is located horizontally level with the bottoms 72 of the second inner corrugated region. The flow channel 62 is formed as a non-corrugated region between the first inner corrugated region and the second inner corrugated region whereby the cross-sectional area between adjacent tops 70 70' is limiting for the flow.

Fig. 7 discloses a closeup side view of the brine channel 62 according to the prior art. As can be clearly seen, the effective flow channel is limited to the area at the non-corrugated region 62 between the contacting tops 70 70A and the contacting tops 70' 70'A. Also visible are the gaskets 74 74'

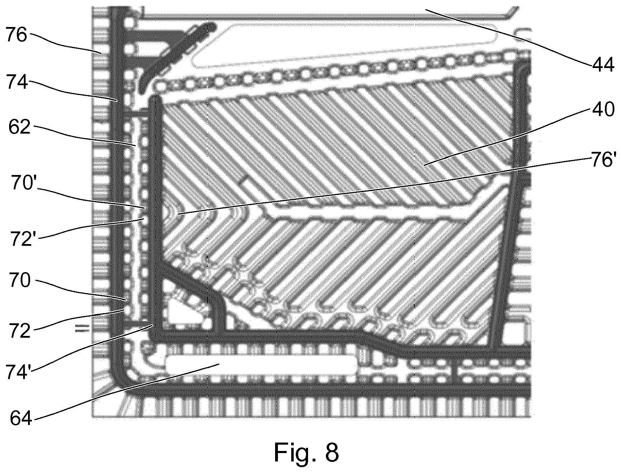

Fig. 8 discloses a closeup front view of the brine channel / flow channel 62 according to the present invention. Similar to the prior art, the flow channel 62 is established between the first gasket element 74 which is located at the edge of the heat exchanger plate and the second gasket element 74' which is located adjacent the evaporation section 40. The first gasket 74 is accommodated in a non-corrugated gasket groove of the heat exchanger plate and is held in place between a first inner corrugated region 70 72 forming part of the flow channel 62 and a first outer corrugated region 76 adjacent the edge of the heat exchanger plate. Similarly, the second gasket 74' is accommodated in a non-corrugated gasket groove of the heat exchanger plate and is held in place between a second inner corrugated region 70' 72' forming part of the flow channel 62 and a second outer corrugated region 76' which forms part of the evaporation section 40. A non-corrugated region, also designated 62, is also provided between the first inner corrugated region and the second inner corrugated region.

The first and second inner corrugated regions are made up by a respective row of tops 70 70' and bottoms 72 72' forming flanks between them. The tops 70 of the first inner corrugated region is located horizontally level with the bottoms 72' of the second inner corrugated region and the bottoms 72 of the first inner corrugated region is located horizontally level with the tops 7' of the second inner corrugated region. In this way a larger effective flow area is achieved in the flow channel 62 compared to the prior art without needing to make the distance between the first and second gasket element 70 70' larger.

In the present case the effective flow channel has a meandering shape and is defined between adjacent tops 70 70' of the respective first and second inner corrugated regions. The limiting cross-sectional area for the flow thus extends between adjacent tops 70 70' of the respective first and second inner corrugated regions, the non-corrugated region between the between the adjacent tops 70 70' the respective first and second inner corrugated regions and the flanks interconnecting the adjacent tops 70 70' of the respective first and second inner corrugated regions and non-corrugated region between the between the adjacent tops 70 70' the respective first and second inner corrugated regions.

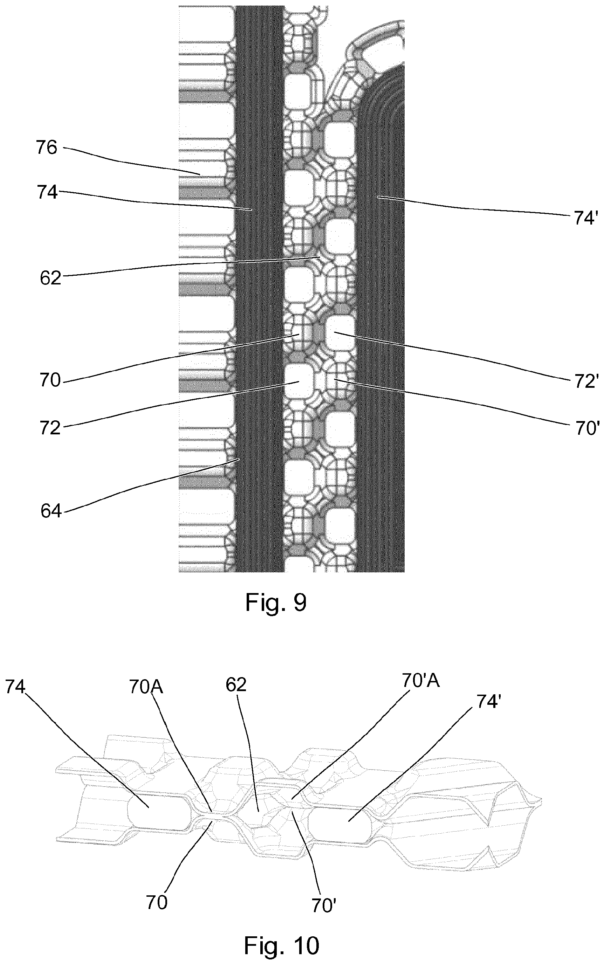

Fig. 9 discloses a closeup side view of an alternative flow channel 62 according to the present invention. The present embodiment is identical to the previous embodiment, except that in the present embodiment, there is no non-corrugated region between the first inner corrugated region and the second inner corrugated region. The limiting cross-sectional area for the flow thus extends between adjacent tops 70 70' of the respective first and second inner corrugated regions and the flanks interconnecting the adjacent tops 70 70' of the respective first and second inner corrugated regions.

Fig. 10 discloses a closeup side view of the brine channel 62 according to the present invention. The present embodiment is identical to the previous embodiment, i.e. there is no non-corrugated region between adjacent tops 70 70' of the respective first and second inner corrugated regions. The flow channel is thus established between the flanks interconnecting the adjacent tops 70 70' of the respective first and second inner corrugated regions. As can be seen, the tops of the first row is horizontally level with the bottoms of the second row, and vice versa

## Claims

1. A plate heat exchanger for treatment of a liquid feed, the plate heat exchanger comprising a plate package having at least two opposite heat exchanger plates defining a plate interspace in-between themselves, each heat exchanging plate defining:
a first non-corrugated gasket groove and a second non-corrugated gasket groove extending parallel to the first non-corrugated gasket groove, whereby a first gasket element sealing between the first non-corrugated gasket grooves of the opposing heat exchanging plates and a second gasket element sealing between the second non-corrugated gasket grooves of the opposing heat exchanging plates, thereby establishing a flow channel between the first gasket element and the second gasket element in the plate interspace,
a first outer corrugated region and a first inner corrugated region extending on opposite sides of the first non-corrugated gasket groove, the first inner corrugated region extending within the flow channel and defining a first row of alternating tops and bottoms, and,
a second outer corrugated region and a second inner corrugated region extending on opposite sides of the second non-corrugated gasket groove, the second inner corrugated region extending within the flow channel and defining a second row of alternating tops and bottoms, whereby the tops of the first row being horizontally level with the bottoms of the second row, and vice versa.

2. The plate heat exchanger according to claim 1, wherein the tops of the opposing heat exchanger plates are contacting each other.

3. The plate heat exchanger according to any of the preceding claims, wherein the outer corrugated regions each define a row of alternating tops and bottoms.

4. The plate heat exchanger according to any of the preceding claims, wherein the flow channel extends between a separation section and an outlet.

5. The plate heat exchanger according to claim 4, wherein the liquid feed is sea water and the flow channel is a brine channel.

6. The plate heat exchanger according to any of the preceding claims, wherein the first outer corrugated region is located adjacent a vertical side edge of the plate.

7. The plate heat exchanger according to any of the preceding claims, wherein the second outer corrugated region is located adjacent an evaporation section or a heating section.

8. The plate heat exchanger according to any of the previous claims, whereby a non-corrugated region is located between the first inner corrugated region and the second inner corrugated region, the further non-corrugated regions form part of the flow channel, or alternatively, where the first row is located immediately adjacent the second row.

9. The plate heat exchanger according to any of the previous claims, wherein each heat exchange plate defines an opposite flow channel on the opposite side of the heat exchanging plate.

10. The plate heat exchanger according to any of the preceding claims, wherein a central axis is defined between two vertical side edges of the plate and a mirrored flow channel is provided on the plate symmetrically arranged on the opposite side of the central axis.

11. The plate heat exchanger according to claim 10, whereby the heat exchange plate having a yet further flow channel located opposite the mirrored flow channel.

12. The plate heat exchanger according to any of the preceding claims, wherein the width of each of the inner corrugated regions are smaller than the width of each of the non-corrugated gasket groove.

13. A heat exchanging plate for a plate heat exchanger for treatment of a liquid feed, the heat exchanging plate defining:
a first non-corrugated gasket groove and a second non-corrugated gasket groove extending parallel to the first non-corrugated gasket groove for contacting a first gasket element and a second gasket element, respectively, thereby establishing a flow channel between the first non-corrugated gasket groove and the second non-corrugated gasket groove,
a first outer corrugated region and a first inner corrugated region extending on opposite sides of the first non-corrugated gasket groove, the first inner corrugated region extending within the flow channel and defining a first row of alternating tops and bottoms, and,
a second outer corrugated region and a second inner corrugated region extending on opposite sides of the second non-corrugated gasket groove, the second inner corrugated region extending within the flow channel and defining a second row of alternating tops and bottoms, whereby the tops of the first row being horizontally level with the bottoms of the second row, and vice versa.

14. A method of manufacturing a plate heat exchanger for treatment of a liquid feed by providing a plurality of heat exchanging plates, each heat exchanging plate defining:
a first non-corrugated gasket groove and a second non-corrugated gasket groove extending parallel to the first non-corrugated gasket groove, thereby establishing a flow channel between the first non-corrugated gasket groove and the second non-corrugated gasket groove,
a first outer corrugated region and a first inner corrugated region extending on opposite sides of the first non-corrugated gasket groove, the first inner corrugated region extending within the flow channel and defining a first row of alternating tops and bottoms, and,
a second outer corrugated region and a second inner corrugated region extending on opposite sides of the second non-corrugated gasket groove, the second inner corrugated region extending within the flow channel and defining a second row of alternating tops and bottoms, whereby the tops of the first row being horizontally level with the bottoms of the second row, and vice versa,
the method further comprising:
arranging at least two of the heat exchanging plate opposite each other defining a plate interspace in-between themselves and having a first gasket element sealing between the first non-corrugated gasket grooves of the opposing heat exchanging plates and a second gasket element sealing between the second non-corrugated gasket grooves of the opposing heat exchanging plates.
